# EUROPEAN PATENT SPECIFICATION

(11) **EP 4 438 959 B1**
(45) Date of publication and mention of the grant of the patent: **05.11.2025**
(21) Application number: 23165586.1
(22) Date of filing: 30.03.2023
(51) Int. Cl.: F24D 18/00, F24D 19/10, F24H 15/148, F24H 15/152, F24H 15/16, F24H 15/164, F24H 15/223, F24H 15/248, F24H 15/262, F24H 15/277, F24H 15/355, F24H 15/375, F24H 15/414, F24H 15/429, F24H 15/457, G05B 17/02, G06Q 10/04, G06Q 50/06, H02J 3/32, F24D 101/20, F24D 101/40

(54) **ENERGY MANAGEMENT SYSTEM FOR A BUILDING AND METHOD FOR MANAGING ENERGY**
ENERGIEMANAGEMENTSYSTEM FÜR EIN GEBÄUDE UND VERFAHREN ZUM ENERGIEMANAGEMENT
SYSTÈME DE GESTION D'ÉNERGIE POUR UN BÂTIMENT ET PROCÉDÉ DE GESTION D'ÉNERGIE

(43) Date of publication of application: 02.10.2024
(73) Proprietor: Mitsubishi Electric R&D Centre Europe B.V., Livingston EH54 5DJ (GB); MITSUBISHI ELECTRIC CORPORATION, Chiyoda-ku Tokyo 100-8310 (JP)
(72) Inventor: CHOWDHURY, Jahedul Islam, Livingston EH54 5DJ (GB); OLKIS, Christopher, Livingston EH54 5DJ (GB); FREEMAN, James, Livingston EH54 5DJ (GB)
(74) Representative: Pfenning, Meinig & Partner mbB

(56) References cited:
- EP-A1- 3 663 652
- DE-A1- 102012 014 710
- DE-A1- 102018 116 845
- US-A1- 2018 252 417
- US-A1- 2018 313 579

## Description

The present invention relates to an energy management system for a building, comprising at least one first thermal energy storage device for providing domestic hot water, at least one second thermal energy storage device for providing space heating, at least one electrical energy storage device, at least three state of charge analysers for determining the state of charge of said devices, at least one heat pump, at least one renewable energy generation device for providing electrical energy, and a controller configured to control an operation of said devices and to control an operation of the at least one heat pump, wherein the controller is configured to determine a state of charge of the at least one electrical energy storage device based on information of the at least one third state of charge analyser and to control a charging and/or a discharging of the at least one electrical energy storage device based on a determined a state of charge of the at least one electrical energy storage device.

Integration of on-site renewable energy generation such as solar photovoltaics (PV) is the first step in achieving net-zero in residential buildings. PV generation is highly intermittent and depends on local solar irradiance, which creates a mismatch between generation and house demand. To utilise all the on-site renewable generation, electrical energy storage (EES) and/or thermal energy storage (TES) are often considered.

Products according to the state of the art usually do not integrate advanced thermal storage. Instead, they integrate appliances, domestic hot water (DHW) tanks and electric batteries. Hence, the focus of systems according to the state of the art is on electric energy management. However, annual thermal energy demand typically exceeds electrical energy demand in most European residential buildings.

In an energy management system of a building that has an energy storage and a renewable energy generation device, it can be possible to charge the energy storage with energy provided by the renewable energy generation device. However, there is often the problem that the energy storage runs out of energy in times in which no renewable energy can be provided by the renewable energy generation device so that the then existing lack of energy must be compensated with energy from an electricity grid. Such dependency of an electricity grid often leads to disadvantages e.g. due to high prices for electric energy provided by the electricity grid.

In recent years, air-to-water (ATW) heat pump (HP) systems that comprise thermal energy storage for domestic hot water (DHW) and space heating (SH) have been integrated with PV-EES systems to maximise PV-self consumption and improve self-sufficiency. However, the HP-TES and PV-EES control systems have been designed separately to optimise their performances and existing systems often leave a large fraction of the battery capacity unused, particularly on days with unusually high PV generation.

DE 10 2012 014710 A1 discloses a power supplying system comprising a photovoltaic generator, a control unit, a power storage unit, an electric heat-generating unit and a heat storage unit, wherein the control unit is connected with the photovoltaic generator and consumers, and is provided to supply electrical power to the building electricity main, power storage unit, electric heat-generating unit and heat storage unit.

US 2018/313579 A1 discloses an energy storage system comprising a thermal energy storage apparatus configured to store thermal energy, an electrical energy storage apparatus configured to electrical energy, and a controller including a memory and an electronic processor, wherein the controller is configured to monitor one or more characteristics of the thermal energy storage apparatus and/or the electrical energy storage apparatus and to control, based on the one or more characteristics, the electrical energy storage apparatus to provide electrical energy to the thermal energy storage apparatus.

EP 3 663 652 A1 discloses a local system for energy production and management, comprising a combustion-based electrical generator with an electric heat pump for generating cold and heat and for supplying electricity, cold, heat and domestic hot water (DHW), and a photovoltaic generator for harnessing solar energy, together with a control unit for managing thermal and electrical loads of the assembly by fully harnessing renewable energies.

DE 10 2018 116845 A1 discloses a method for operating a heat pump designed to generate thermal energy for heating a building, wherein the method is characterized in that the heat pump is operated with the aid of a predictive control in such a way that it generates, at least temporarily, an amount of thermal energy that exceeds the current heating energy requirement in order to specifically cause a temporal shift in the consumption of electrical energy required by the heat pump.

US 2018/252417 A1 discloses a water heater control system, comprising a photovoltaic power generator interconnected with a commercial power supply, an electrical load circuit including a storage-type electric water heater using power from the commercial power supply and generated power of the photovoltaic power generator to perform a water heating operation of heating low temperature water to high temperature water and storing the high temperature water, and a HEMS controller limiting a water heating operation of the storage-type electric water heater by stopping or suppressing the water heating operation of the storage-type electric water heater when a power fee data for purchased power supplied to the electrical load circuit from the commercial power supply exceeds a standard monetary amount.

Starting from this, it was the object of the present invention to provide an energy management system for a building with which it is possible to increase self-sufficiency, reduce electricity grid interaction and optimally employ a capacity of an electrical energy storage device while ensuring a long life of the electrical energy storage device.

This object is achieved with respect to an energy management system by the features of claim 1 and with respect to method for using an energy management system by the features of claim 13. The dependent claims represent advantageous further developments.

In accordance with the present invention, an energy management system for a building is provided. The energy management system comprises at least one heat pump, at least one first thermal energy storage device for providing domestic hot water, at least one second thermal energy storage device for providing space heating, at least one renewable energy generation device for providing electrical energy, at least one electrical energy storage device, at least one first state of charge analyser for determining the state of charge of the at least one first thermal energy storage device, at least one second state of charge analyser for determining the state of charge of the at least one second thermal energy storage device, at least one third state of charge analyser for determining the state of charge of the at least one electrical energy storage device, and a controller.

The controller is configured to control an operation of the at least one heat pump, the at least one first thermal energy storage device, the at least one second thermal energy storage device, the at least one electrical energy storage device and the at least one renewable energy generation device, wherein the controller is configured to determine a state of charge of the at least one electrical energy storage device based on information of the at least one third state of charge analyser, and wherein the controller is configured to control a charging and/or a discharging of the at least one electrical energy storage device based on a determined a state of charge of the at least one electrical energy storage device.

The invention improves self-sufficiency and self-consumption of the building by integrating different devices through a (single) controller. The controller's logic can implement different features to improve the self-consumption of renewable electricity generated onsite. With this control, it can be made possible to shift as much of the heat pump system operation into times, when renewable energy is available and it can be ensured that the capacity of the at least one electrical energy storage device is optimally exploited and the time until its end of life is maximised.

Due to the presence of the at least one first state of charge analyser, the at least one second state of charge analyser and the at least one third state of charge analyser, the state of charge of the at least one first thermal energy storage device, the state of charge of the at least one second thermal energy storage device and the state of charge of the at least one electrical energy storage device can be easily determined. The system according to the invention thus integrates a control of a heat pump with a thermal energy storage device for providing domestic hot water and a thermal energy storage device for providing space heating on the one hand, and an electrical energy storage device on the other hand. The control of the system allows to utilise heat pump and the electrical energy storage device as dispatchable loads along with a building itself by storing excess electricity generated from renewables, directly (in the electrical energy storage device) and indirectly as heat (in the thermal energy storage device), wherein the stored energy can be used later when the demand arises or when renewable generation is zero. In particular, the system according to the invention demonstrates the exploitation of the minimum storage discharge limit (or dynamic lower SOC limit) of an electrical energy storage device and/or thermal energy storage device that maximises battery life and enhances renewable self-consumption and building self-sufficiency, thereby supporting an increased level of energy autarky for residential buildings.

The state of charge of the at least one first thermal energy storage device determined by the at least one first state of charge analyser, the state of charge of the at least one second thermal energy storage device determined by the at least one second state of charge analyser and the state of charge of the at least one electrical energy storage device determined by the at least one third state of charge analyser can be used by the controller for controlling one or more elements of the energy management system.

The charging of the at least one first thermal energy storage device, the at least one second thermal energy storage device and the at least one electrical energy storage device can be controlled by the controller. In detail, the controller uses the state of charge of the at least one first thermal energy storage device, the state of charge of the at least one second thermal energy storage device and the state of charge of the at least one electrical energy storage device (and optionally also at least one further parameter) to decide whether at least one of these devices should be charged and to decide which one of the these devices should be charged.

A renewable energy generation device for providing electrical energy can be understood as a device that generates electrical energy from renewable sources, such as solar radiation, wind, and/or water. The at least one renewable energy generation device can provide energy which can be used e.g. by the at least one heat pump, for charging the at least one first thermal energy storage device, for charging the at least one second thermal energy storage device, and/or for charging at least one electrical energy storage device.

The at least one heat pump can provide energy which can be used e.g. for charging the at least one first thermal energy storage device, for charging the at least one second thermal energy storage device, for charging at least one electrical energy storage device, and/or for providing space heating in a building. The at least one heat pump can use (renewable) energy provided by the at least one renewable energy generation device for providing electrical energy. Since the energy management system comprises at least one electrical energy storage device, the at least one heat pump can preferably also use energy provided by the at least one electrical energy storage device. If the energy management system is connected with an electricity grid (e.g. a national electricity grid and/or a local area micro-grid), the at least one heat pump can also use energy provided by the electricity grid.

The at least one first thermal energy storage device is an at least one thermal energy storage device for providing domestic hot water. The at least one first thermal energy storage device can provide (thermal) energy which can be used e.g. by domestic hot water consuming devices (e.g. bathtub, sink, appliances). The domestic hot water consuming devices can be comprised by the energy management system.

The at least one second thermal energy storage device is an at least one thermal energy storage device for providing (heat for) space heating. The at least one second thermal energy storage device can provide (thermal) energy which can be used e.g. by at least one space heating device for heating at least one space comprised by the building. The at least one space heating device can be comprised by the energy management system.

The first and second state of charge analysers are devices with which a state of charge (SOC) of a thermal energy storage device can be analysed and/or determined. Generally speaking, the state-of-charge, SOC, of a thermal energy storage device may refer to a level of energy stored in said thermal energy storage device relative to a given upper and a given lower energy limit. The upper limit can be determined by a calibration of the thermal energy storage, e.g. enthalpy-based calibration. The state-of-charge thus can indicate a remaining energy storage level of the storage device. More generally speaking, the state-of-charge relates to the energy available in the thermal energy storage device.

The state-of-charge of a sensible heat energy storage system can be determined by the temperature, the mass and the specific heat capacity of the storage fluid used. The state-of-charge of a latent heat storage can be determined or obtained in various ways, e.g. by measuring the gas expansion inside a sealed PCM tank (as described e.g. in EP 2 482 021 A2), from power sensors through an enthalpy analysis (as described e.g. in AU 2018 202 778 B2), from a single temperature sensor placed at the bottom of the fluid container of the device (as described e.g. in US 2014/102 662 A1), by at least two temperature sensors that are placed on a PCM tank surface (as described e.g. in EP 3 336 473 A1), or by a single temperature sensor that can be used to enable a model-based state-of-charge prediction of a latent heat thermal energy storage device (as described e.g. in WO 2018/122392 A1).

The third state of charge analyser is a device with which a state of charge (SOC) of an electrical energy storage device can be analysed and/or determined. Generally speaking, the state-of-charge, SOC, of an electrical energy storage device may refer to a level of energy stored in said electrical energy storage device relative to a given upper and a given lower energy limit. The upper limit can be determined by a calibration of the electrical energy storage. The state-of-charge thus can indicate a remaining energy storage level of the storage device. More generally speaking, the state-of-charge relates to the energy available in the electrical energy storage device.

The state-of-charge of an electrical energy storage system can be determined by known battery management systems.

The system can further comprise a MPPT (Maximum Power Point Tracking) solar charge controller and/or inverter. The presence of the MPPT solar charge controller allows a more efficient use of solar energy.

The energy management system can comprise a grid connection for providing and accepting electrical energy and/or can be connected to an electricity grid (e.g. a national electricity grid and/or a local area micro-grid). If the energy management system is connected to an electricity grid, the at least one heat pump can use energy provided by the electricity grid, i.e. the electricity grid can be an energy source for the at least one heat pump (in addition to other energy sources such as the at least one renewable energy generation device and the at least one electrical storage device).

In a preferred embodiment, the controller is configured to determine and/or receive a weather forecast, a forecast about an amount of electrical energy provided by the at least one renewable energy generation device and/or a forecast about a price of electrical energy provided by a grid connection of the system. The advantage is that the controller allows a dynamic regulation of the minimum SOC limit (= a dynamic regulation of the lower limit state of charge) for the EES along with different operating setpoints based on the weather and based on a time-of-use electricity price forecast. This allows the system according to the invention to be more flexible for balancing the electricity generation and demand on-site, which leads to an even further improved self-consumption and self-sufficiency.

The controller is preferably configured to update said forecast, preferably in a time interval in the range of 1 minute to 48 hours, preferably in a time interval of 18 to 30 hours, especially in a time interval of 24 hours.

Moreover, the controller is preferably configured to set a lower limit state of charge threshold for the at least one electrical energy storage device depending on the determined and/or received forecast. The advantage is that the battery capacity can be optimally exploited and a long battery life can be ensured.

A further preferred embodiment of the energy management system according to the present invention is characterized in that the at least one renewable energy generation device for providing electrical energy is selected from the group consisting of photovoltaic devices (in particular photovoltaic cells and/or photovoltaic modules), wind turbines, water turbines, and combinations thereof.

A further preferred embodiment of the energy management system according to the present invention is characterized in that
- the at least one first thermal energy storage device for providing domestic hot water is selected from the group consisting of phase-change material storage devices, hot water tanks, and combinations thereof, preferably phase-change material storage devices with a melting point of 40 °C to 70 °C; and/or
- the at least one second thermal energy storage device for providing space heating is selected from the group consisting of phase-change material storage devices, buffer tanks, and combinations thereof, preferably phase-change material storage devices with a melting point of 30 °C to 55 °C; and/or
- the at least one electrical energy storage device is selected from the group consisting of batteries, capacitors, and combinations thereof, wherein the at least one electrical energy storage device is preferably selected from the group consisting of lead batteries, Li-ion batteries and flow batteries.

The at least one first thermal energy storage device and the at least one second thermal energy storage device can be present in form of a combined thermal energy storage device for providing domestic hot water and for providing space heating. The combined thermal energy storage device for providing domestic hot water and for providing space heating is preferably selected from the group consisting of phase-change material storage devices, hot water tanks, buffer tanks, and combinations thereof.

In addition to the at least one first thermal energy storage device and the at least one second thermal energy storage device, the energy management system can comprise at least one combined thermal energy storage device for providing domestic hot water and for providing space heating. The combined thermal energy storage device for providing domestic hot water and for providing space heating is preferably selected from the group consisting of phase-change material storage devices, hot water tanks, buffer tanks, and combinations thereof.

The system according to the invention can further comprise at least one renewable energy generation device for providing thermal energy. The advantage is that thermal energy obtained from a renewable energy source can be used by the system, further improving its self-sufficiency and carbon footprint. The at least one renewable energy generation device for providing thermal energy can be selected from the group consisting of solar collector, waste water heat recovery device, district heating network and combinations thereof. The controller of the system can be configured to provide thermal energy, which is available from the at least one renewable energy generation device for providing thermal energy, to the at least one first thermal energy storage device for providing domestic hot water and/or to the at least one second thermal energy storage device for providing space heating. This can reduce the burden on the at least one renewable energy generation device for providing electrical energy (optionally also the grid) to the at least one heat pump for charging said storage devices.

The following preferred embodiments relate to a configuration of the controller regarding a charge and/or discharge of the at least one electrical energy storage device.

In this regard, the controller of the system can be configured such that, when a state of charge of the at least one electrical energy storage device is at or below a lower limit of a charge threshold for the at least one electrical energy storage device, a discharge of the at least one electrical storage device is prohibited. Furthermore, the controller can be configured such that, when a state of charge of the at least one electrical energy storage device is above a lower limit of a charge threshold for the at least one electrical energy storage device, a discharge of the at least one electrical storage device is allowed. This configuration of the controller protects the at least one electrical energy storage device and ensures that the life of the at least one electrical energy storage device of the system is prolonged. This renders the use of the system more economical and ecological.

In a preferred embodiment, the controller is configured to prioritize using electrical power which is available from the at least one renewable energy generation device and/or which is available from the at least one electrical energy storage device, over electrical power available from the grid connection. This allows a more economic and more ecologic use of electrical energy by the system.

The controller can be configured to direct the electrical power from the at least one renewable energy generation device for providing electrical energy and/or from the at least one electrical energy storage device to any device of the system, preferably when electrical power is needed by any device of the system.

Moreover, the controller can be configured to direct electrical power from the at least one renewable energy generation device for providing electrical energy and/or from the at least one electrical energy storage device to the at least one heat pump, preferably when electrical power is needed by the at least one heat pump, optionally when a state of charge of the at least one first thermal energy storage device for providing domestic hot water is below a lower limit state of charge threshold to maintain a minimum level and/or when a state of charge of the at least one second thermal energy storage device for providing space heating is below a lower limit state of charge threshold to maintain a minimum level.

Furthermore, the controller can be configured to direct electrical power from the at least one renewable energy generation device for providing electrical energy to the at least one electrical energy storage device, preferably when no electrical power is needed by any device of the system and a state of charge of the at least one electrical energy storage device is below an upper limit state of charge threshold. This has the advantage that electrical power is efficiently stored by the system in situations in which no electrical power is needed by the system.

Besides, the controller can be configured to direct electrical power from the at least one renewable energy generation device for providing electrical energy and/or from the at least one electrical energy storage device to a grid connection of the system, preferably when no electrical power is needed by any device of the system and when a state of charge of the at least one electrical energy storage device is above an upper limit state of charge threshold. This has the advantage that excess and non-storable electrical power can be provided to the grid for other people to use it and for generating an income for the user of the system.

Moreover, the controller can be configured such that, when surplus electrical energy is available from the at least one renewable energy generation device, a charge of the at least one electrical energy storage device (i.e. supply of electrical energy thereto) by the at least one renewable energy generation device is prioritized compared to a supply of electrical energy to the at least one electrical energy storage device by a grid to which the system is connected.

The configuration of the controller mentioned above has the advantage that no electrical energy is drawn from the grid when the at least one electrical energy storage device is charged. This can ensure a cost-efficient operation by minimising the unnecessary consumption of grid energy. Furthermore, by only using surplus renewable energy, it allows renewable generation to be prioritised for powering electrical loads in the building (e.g, the at least one heat pump) thereby also minimising storage losses due to charging and discharging of the at least one electrical energy storage device.

In a preferred embodiment, the controller is configured to enter a proactive period when at least one of the following conditions is fulfilled and/or to enter a normal period when none of the following conditions is fulfilled:
i) the at least one heat pump is active and a power generation from the at least one renewable energy generation device is larger than a maximum charge and discharge power of the at least one electrical energy storage device;
ii) the at least one heat pump is inactive and electrical power is provided to the grid connection;
iii) a price for obtaining electrical energy from the grid connection is below a set threshold; and
iv) a set amount of hours preceding a peak in price for obtaining electrical energy from the grid connection has been entered.

In the proactive period, an upper limit of a state of charge threshold of the at least one first thermal energy storage device for providing domestic hot water and of the at least one second thermal energy storage device for providing space heating is set to a boost value, and a lower limit of a state of charge threshold of the at least one first thermal energy storage device for providing domestic hot water and of the at least one second thermal energy storage device for providing space heating is set to a boost value.

In the normal period, an upper limit of a state of charge threshold of the at least one first thermal energy storage device for providing domestic hot water and of the at least one second thermal energy storage device for providing space heating is set to a normal value, and a lower limit of a state of charge threshold of the at least one first thermal energy storage device for providing domestic hot water and of the at least one second thermal energy storage device for providing space heating is set to a normal value.

The controller can be configured such that, when the proactive period has been entered and when the at least one first thermal energy storage device for providing domestic hot water and the at least one second thermal energy storage device for providing space heating are
i) fully charged, a target room temperature setpoint is set to a boosted target room temperature setpoint and a room temperature deadband is set to a boosted room temperature deadband; and/or
ii) not fully charged, a target room temperature setpoint is set to a normal target room temperature setpoint and a room temperature deadband is set to a normal room temperature deadband.

The following preferred embodiments relate to a configuration of the controller regarding a charge of the first at least one first thermal energy storage device for providing domestic hot water and/or the second thermal energy storage device for providing space heating.

In this regard, the controller can be configured such that, when
a state of charge of the at least one first thermal energy storage device is below a predefined first minimum lower limit state of charge threshold,
the at least one first thermal energy storage device is charged, preferably by energy provided by the at least one heat pump.

Moreover, the controller can be configured such that, when
a state of charge of the at least one first thermal energy storage device is at or above a predefined first minimum lower limit state of charge threshold,
a state of charge of the at least one second thermal energy storage device for providing space heating is below a lower limit state of charge threshold to maintain a minimum level of the at least one second thermal energy storage device for providing space heating, and
space heating is not presently being provided by the heat pump,
the at least one second thermal energy storage device for providing space heating is charged, preferably by energy provided by the at least one heat pump.

Furthermore, the controller can be configured such that, when
a state of charge of the at least one first thermal energy storage device is at or above a predefined first minimum lower limit state of charge threshold,
a state of charge of the at least one second thermal energy storage device for providing space heating is below a lower limit state of charge threshold to maintain a minimum level of the at least one second thermal energy storage device for providing space heating and space heating is presently being provided by the heat pump, or a state of charge of the at least one second thermal energy storage device for providing space heating is at or above a lower limit state of charge threshold to maintain a minimum level of the at least one second thermal energy storage device for providing space heating,
the at least one first thermal energy storage device for providing domestic hot water is presently being charged, and
a state of charge of the at least one first thermal energy storage device for providing domestic hot water is below an upper limit state of charge threshold of the at least one first thermal energy storage device for providing domestic hot water,
the at least one first thermal energy storage device is charged, preferably by energy provided by the at least one heat pump.

Besides, the controller is configured such that, when
a state of charge of the at least one first thermal energy storage device is at or above a predefined first minimum lower limit state of charge threshold,
a state of charge of the at least one second thermal energy storage device for providing space heating is below a lower limit state of charge threshold to maintain a minimum level of the at least one second thermal energy storage device for providing space heating and space heating is presently being provided by the heat pump, or a state of charge of the at least one second thermal energy storage device for providing space heating is at or above a lower limit state of charge threshold to maintain a minimum level of the at least one second thermal energy storage device for providing space heating,
the at least one first thermal energy storage device for providing domestic hot water is presently being charged and a state of charge of the at least one first thermal energy storage device for providing domestic hot water is at or above an upper limit state of charge threshold, or the at least one first thermal energy storage device for providing domestic hot water is not presently being charged, the at least one second thermal energy storage device for providing space heating is presently being charged, and
a state of charge of the at least one second thermal energy storage device for providing space heating is below an upper limit state of charge threshold,
the at least one second thermal energy storage device for providing space heating is charged, preferably by energy provided by the at least one heat pump.

In addition, the controller is configured such that, when
a state of charge of the at least one first thermal energy storage device is at or above a predefined first minimum lower limit state of charge threshold,
a state of charge of the at least one second thermal energy storage device for providing space heating is below a lower limit state of charge threshold to maintain a minimum level of the at least one second thermal energy storage device for providing space heating and space heating is presently being provided by the heat pump, or a state of charge of the at least one second thermal energy storage device for providing space heating is at or above a lower limit state of charge threshold to maintain a minimum level of the at least one second thermal energy storage device for providing space heating,
the at least one first thermal energy storage device for providing domestic hot water is presently being charged and a state of charge of the at least one first thermal energy storage device for providing domestic hot water is at or above an upper limit state of charge threshold, or the at least one first thermal energy storage device for providing domestic hot water is not presently being charged, the at least one second thermal energy storage device for providing space heating is presently being charged and a state of charge of the at least one second thermal energy storage device for providing space heating is at or above an upper limit state of charge threshold, or the at least one second thermal energy storage device for providing space heating is not presently being charged, and
a state of charge of the at least one first thermal energy storage device is below a lower limit state of charge threshold,
the at least one first thermal energy storage device is charged, preferably by energy provided by the at least one heat pump.

Moreover, the controller is configured such that, when
a state of charge of the at least one first thermal energy storage device is at or above a predefined first minimum lower limit state of charge threshold,
a state of charge of the at least one second thermal energy storage device for providing space heating is below a lower limit state of charge threshold to maintain a minimum level of the at least one second thermal energy storage device for providing space heating and space heating is presently being provided by the heat pump, or a state of charge of the at least one second thermal energy storage device for providing space heating is at or above a lower limit state of charge threshold to maintain a minimum level of the at least one second thermal energy storage device for providing space heating,
the at least one first thermal energy storage device for providing domestic hot water is presently being charged and a state of charge of the at least one first thermal energy storage device for providing domestic hot water is at or above an upper limit state of charge threshold, or the at least one first thermal energy storage device for providing domestic hot water is not presently being charged, the at least one second thermal energy storage device for providing space heating is presently being charged and a state of charge of the at least one second thermal energy storage device for providing space heating is at or above an upper limit state of charge threshold, or the at least one second thermal energy storage device for providing space heating is not presently being charged,
a state of charge of the at least one first thermal energy storage device is at or above a lower limit state of charge threshold, and
a state of charge of the at least one second thermal energy storage device for providing space heating is below a lower limit state of charge threshold,
the at least one second thermal energy storage device for providing space heating is charged, preferably by energy provided by the at least one heat pump

The following preferred embodiments relate to a configuration of the controller regarding a discharge of the first at least one first thermal energy storage device for providing domestic hot water and/or the second thermal energy storage device for providing space heating.

In this regard, the controller can be configured such that, when
a measured room temperature is lower than a target room temperature setpoint,
the at least one first thermal energy storage device for providing domestic hot water is not presently being charged, and
   i) a state of charge of the at least one second thermal energy storage device for providing space heating is at or below a lower limit state of charge threshold for the at least one second thermal energy storage device for providing space heating, a space heating is performed from the at least one heat pump; and/or
   ii) a state of charge of the at least one second thermal energy storage device for providing space heating is above a lower limit state of charge threshold for the at least one second thermal energy storage device for providing space heating, and a proactive period shall not occur, a space heating is performed from the at least one second thermal energy storage device for providing space heating; and/or
   iii) a state of charge of the at least one second thermal energy storage device for providing space heating is above a lower limit state of charge threshold for the at least one second thermal energy storage device for providing space heating, and a proactive period shall occur, a space heating is performed from the at least one heat pump.

Moreover, the controller can be configured such that, when
a measured room temperature is at or above a target room temperature setpoint and lower than a sum of the target room temperature setpoint and a room temperature deadband,
space heating is active, and
   i) a state of charge of the at least one second thermal energy storage device for providing space heating is at or below a lower limit state of charge threshold for the at least one second thermal energy storage device for providing space heating, a space heating is performed from the at least one heat pump; and/or
   ii) a state of charge of the at least one second thermal energy storage device for providing space heating is above a lower limit state of charge threshold for the at least one second thermal energy storage device for providing space heating, and a proactive period shall not occur, a space heating is performed from the at least one second thermal energy storage device for providing space heating; and/or
   iii) a state of charge of the at least one second thermal energy storage device for providing space heating is above a lower limit state of charge threshold for the at least one second thermal energy storage device for providing space heating, and a proactive period shall occur, a space heating is performed from the at least one heat pump.

The energy management system can further comprise at least one space heating device for heating at least one space comprised by the building, wherein preferably
i) the controller is configured to control the heat pump to deliver heat energy to the at least one space heating device ; and/or
ii) the at least one space heating device is selected from the group consisting of under floor heatings, wall heatings, fan coil units, and combinations thereof.

Preferably, the at least one space heating device is selected from the group consisting of under floor heatings, wall heatings, fan coil units, and combinations thereof. Alternatively, the at least one space heating device can also be comprised of radiators and other means of heat emitting devices.

In a preferred embodiment, the controller of the system is connected to the internet. In a more preferred embodiment, the controller is a remote controller or a controller comprised in a cloud. The presence of the controller in a cloud allows reducing the requirement for multiple hardware interfaces and allows the system to be realized in a more compact and economical manner.

A further preferred embodiment of the energy management system according to the present invention is characterized in that the energy management system comprises a state of charge monitoring device for monitoring the state of charge of the at least one first thermal energy storage device, the state of charge of the at least one second thermal energy storage device and/or the state of charge of the at least one electrical energy storage device.

Preferably, the energy management system can further comprise one or more of the following elements:
- Connected devices:
   ∘ Space heating (SH) devices (e.g. under floor heating/ walls, fan coil units FCU)
   ∘ DHW devices (bathtub, sink, appliances)
   ∘ inverters, solar chargers, battery management systems BMS, and PV-battery energy manager
- Connected software:
   ∘ Application programming interface (API) for PV-Battery systems
   ∘ API for system components, e.g. heat pump
   ∘ API for forecasting data, e.g. weather data and/or electricity forecast data
- Inputs:
   ∘ External data
      ▪ Time-of-use electricity tariff (ToU) information
      ▪ Weather data (forecast or live)
   ∘ Immediate DHW demand
   ∘ Room temperature
   ∘ User settings, e.g. thermostat setpoint
   ∘ Heat pump status
   ∘ EES SOC (e.g. Lower and maximum SOC)
   ∘ TES SOC (e.g. temperatures of DHW and SH TES)
   ∘ PV-EES energy manager relays (to integrate PV-battery and heat pump in a building)
   ∘ House electricity demand, e.g. historic and current or obtained from house simulation model and/or house demand profile
- Internal processing components:
   ∘ Control logic to maximise internal renewable energy consumption:
      ▪ Shift as much energy demand into times of renewables availability
      ▪ Avoid ToU price peaks
      ▪ Use thermal mass of the building as additional TES
      ▪ PV and ToU thresholds for system operation
      ▪ Boost temperature limits for TES charging during renewables availability
      ▪ Optimise energy use by prioritising direct use of renewable energy to meet house demand first.
      ▪ Use EES, heat pump with TES and house thermal mass as dispatchable loads.
      ▪ EES lower SOC limit control with PV generation and ToU electricity price forecast to maximise battery capacity use.
   ∘ Predictive components:
      ▪ DHW demand
      ▪ Space heating demand
         - Thermal model of the building. Different predefined building types. Allows space heating prediction from weather forecast.
      ▪ Solar irradiance model
      ▪ Heat pump performance model
         - Improved COP from weather forecast
         - Deciding on best heat pump thermal energy receiver. Each energy receiver (e.g. direct heating from heat pump, charging SH-TES, charging DHW-TES) operates at different output temperature and temperature lift. Control evaluates best temperature lift for most efficient system operation at a given time.
      ▪ Weather forecasting/ Live weather data
      ▪ Electricity demand model for various consuming devices present in building

- Outputs:
   ∘ System status/operating modes:
      ▪ Direct use of energy from renewable sources, when available
      ▪ Charge electrical energy storage from renewables
      ▪ Charge thermal energy storage at different temperatures depending on the EES SOC and renewable availability.
      ▪ Discharge DHW from energy storage, but preheat mains water first in heat pump to conserve energy and smoothen heat pump operation
      ▪ Discharge DHW from energy storage
      ▪ Provide space heating from energy storage
      ▪ Provide space heating from heat pump

Furthermore, the energy management device can comprise one or more of the following additional system elements:
∘ Household appliances connected to DHW, e.g. dishwasher, washing machine
∘ Other heat sources
   ▪ Waste water heat recovery
   ▪ Solar thermal collector
   ▪ District heating network

According to a further preferred embodiment of the present invention, the controller is configured to use one or more or all of the following priority levels for operation:
1. During the hours of renewable generation, the priority is to meet building electricity demand directly from PV first and then from EES. Any additional electricity needed will come from the grid. On the other hand, any excess electricity will go to EES if it is not fully charged. Otherwise, excess electricity will be utilised by the heat pump for a boosted operation for DHW-TES and SH-TES.
2. If DHW-TES is below its lower state of charge limit, heat pump operation is prioritised to charge the DHW-TES.
3. If there is a demand for space heating:
   a. Space heating is provided directly to the space by the heat pump (bypassing the SH-TES) during any "proactive" period where it is favourable to consume electricity, providing the heat pump is not already being used to charge the DHW-TES.
   b. At all other times space heating is provided from the SH-TES, providing the SH-TES is sufficiently charged.
   c. If neither a or b, space heating is provided directly to the space by the heat pump, providing the heat pump is not already being used to charge the DHW-TES.
4. If SH-TES is below its lower state of charge limit:
   a. If there is additional renewable heat source such as solar collectors, charge the SH-TES without the heat pump.
   b. Charge the SH-TES with the heat pump if no additional renewable heat source is available.
5. During any "proactive" period where it is favourable to consume electricity:
   a. DHW-TES is charged to a boosted (increased) SOC upper limit.
   b. SH-TES is charged to a boosted (increased) SOC upper limit.
   c. Space heating is provided according to a boosted (increased) target space temperature.

According to the invention, a method for energy management of a building is provided, wherein the method comprising using an energy management system for a building according to the present invention to manage energy in a building.

The preferred embodiments of the energy management system described above also correspondingly apply to the method according to the present invention.

The present invention will be explained in more detail with reference to the following figures and examples without restricting it to the specific embodiments and parameters shown here.

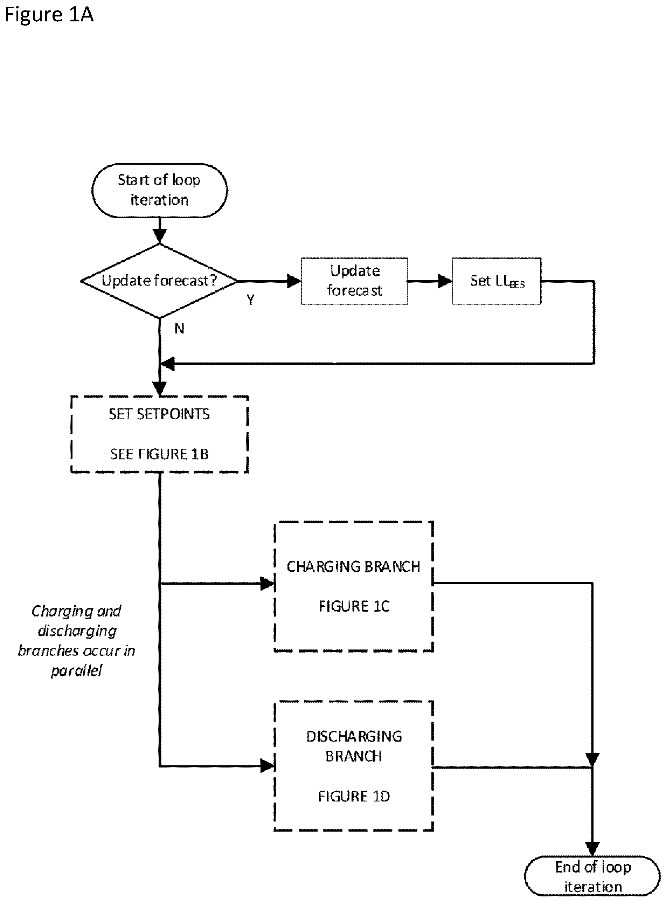

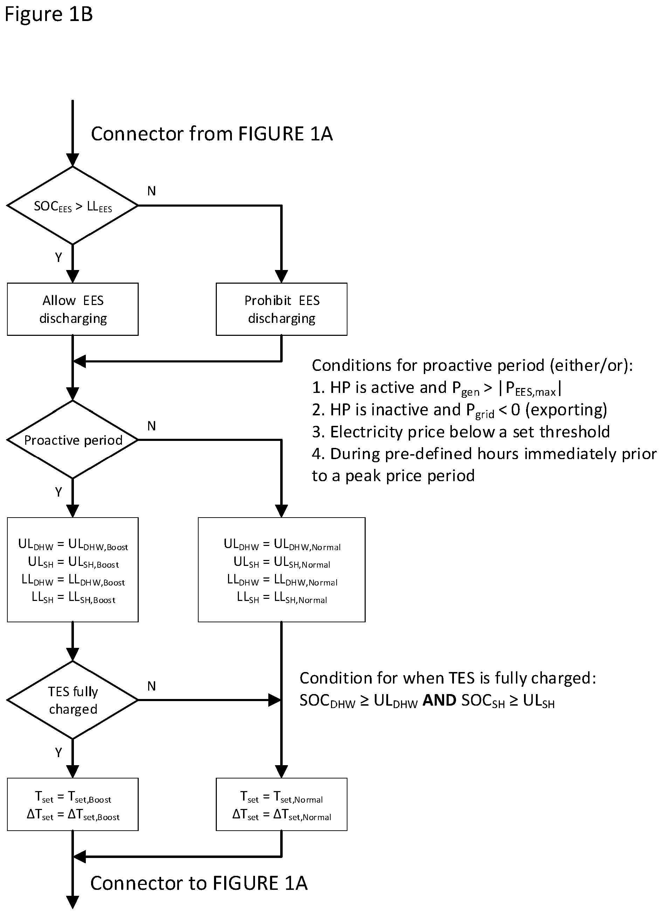

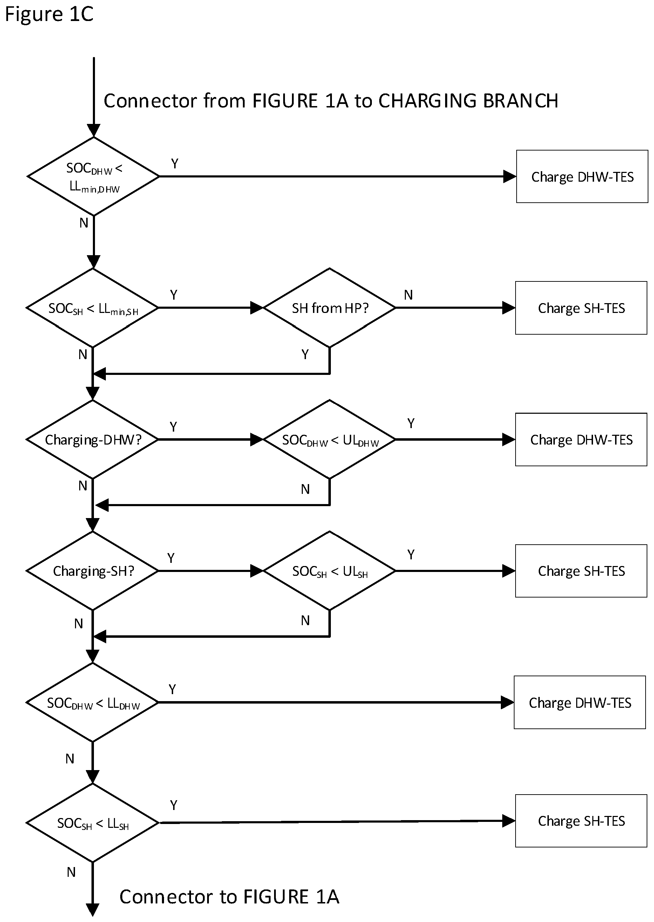

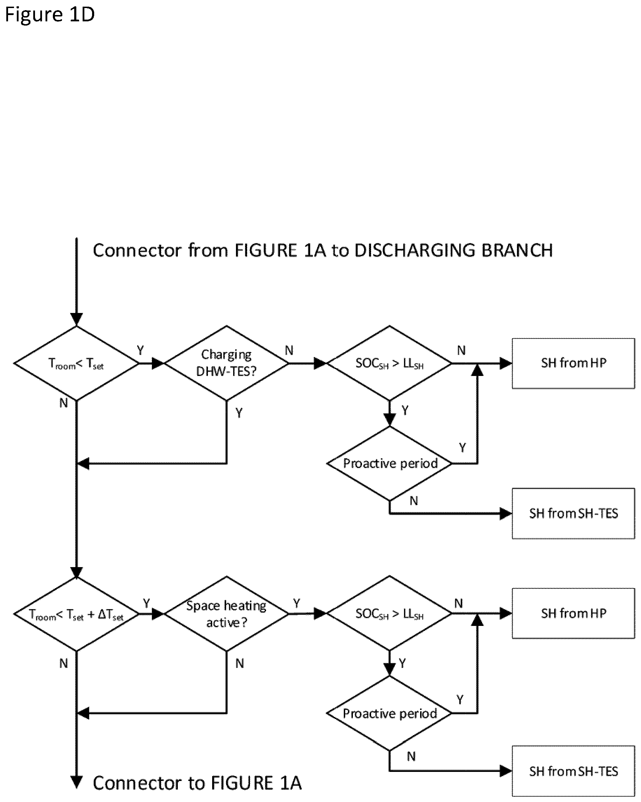

Figures 1A, 1B, 1C and 1D show an overview of a single control loop iteration that can be used by a specific embodiment of the energy management system according to the present invention.

In the following, an outline of the control system's priorities as shown in these Figures is presented:

### 1. Loop iterations

The controller is configured to perform iterations of the control system's parameters periodically and use updated system information based on operating states and measured variables. At one or more times during the day, forecast data is updated. The forecast update does not necessarily occur during each loop iteration.

### 2. Forecast data

During an iteration where the forecast data is updated, the controller is configured to receive useful forecast data (e.g. weather and time-of-use electricity tariff forecast data) from a one or more forecast service providers (e.g. via an internet API communication). Based on the up-dated forecast data, the controller is configured to adjust settings such as lower SOC limit for EES. This is a dynamic lower SOC limit, which prevents EES from discharging below that level. The controller is configured to regulate a lower SOC limit to prevent a harmful low SOC from being allowed to continue for an extended period. This lower SOC limit could be set by considering the PV generation forecast, current SOC level, building electricity demand during the hours of PV generation, and time-of-use electricity price forecast. The regulation of lower SOC limit also allows the EES to be discharged appropriately over-night so that it is available to store a large amount of electricity during the high PV generation times. Regularly charging the EES up to a higher SOC level and preventing the EES to stay at a lower SOC level increases the battery life.

### 3. Setpoints

During each loop iteration, the controller is configured to set setpoints for DHW-TES, SH-TES, and room temperature. When a proactive period is active, SOC setpoints for DHE-TES and SH-TES are set to boosted (increased) upper limits. In a normal operation period, all the SOC setpoints for TES are set to normal upper limits.

### 4. Proactive charging

A proactive period is a period where it is preferential to boost renewable consumption. It may include times when:
a) low-cost electricity is available
b) when surplus PV energy is available, or
c) during a pre-defined period immediately prior to a peak price period.

Proactive operation can have different purposes and can be combined with predictive tools.

Figure 1B shows conditions for the proactive operation. Note that the specific example uses the following assumptions:
- Power to or from the grid, denoted P_{grid}, is negative when exporting to the grid and positive when importing from the grid.
- Battery power, denoted P_{EES}, is positive when charging, negative when discharging. It is assumed the maximum charging rate is equal in magnitude to the maximum discharging rate.
- The maximum discharging rate form the battery is sufficient to power the heat pump entirely from the battery, providing the battery is sufficiently charged. Thus P_{HP,nominal} < | P_{EES,max} |

### 5. Charging and discharging are split into two separate decision branches

On the charging branch, the controller of the system is configured to prioritise the provision of domestic hot water (DHW). However, the thermal output from the heat pump is usually insufficient to heat mains water directly. Thus, a DHW thermal energy storage (DHW-TES) device is required, which needs to be maintained at a minimum state of charge level. The minimum state of charge level ensures that the user can discharge DHW at any time. Some appliances like dishwashers or washer-driers could be integrated into the control system to use excess renewable energy, but a well dimensioned EES can overcome this issue as it allows instant operation of appliances.

The controller is configured to monitor the state of charge of the DHW-TES at the start of each execution and initiates a DHW-TES charging cycle if the SOC drops below a threshold. The outlet temperature for DHW-TES charging is highest in the entire system and the heat pump cannot provide simultaneous space heating during this period. However, space heating can be provided from the SH-TES during DHW-TES charging.

The controller is configured to monitor the SH-TES state of charge as a second priority to maintain a minimum level as well. Then, the controller is configured to continue charging either DHW-TES or SH-TES, when a charging cycle was initiated previously, and the system has not reached its upper state of charge threshold yet. Once a DHW-TES or SH-TES is in operation, the controller is configured to monitor conditions for proactive charging. If one of the conditions is satisfied, then the controller is configured to increase the set points for charging the TES to their "boosted" values. If proactive charging conditions are not satisfied, the controller is configured to apply normal set point values for DHW-TES or SH-TES charging.

On the discharging branch, lower and upper deadband thresholds for room temperature are monitored. Space heating is initiated if the room temperature falls below the lower deadband limit. The system operates in different modes to either supply heat emitters with energy directly from the heat pump or the energy storage.

### 6. Self-consumption

The controller is configured to increase renewable energy consumption by raising the thresholds, when renewable energy is available to boost the capacities of the TES. If all TES are fully charged to the maximum outlet temperature of the heat pump, a booster heater can be used to charge them further. In addition, the building's thermal mass can be used as additional TES by increasing the space heating set temperature.

Furthermore, different system operating modes can be defined, which can include:
- Charging of SH and DHW-TES from either at least one heat pump or a solar collector. In larger buildings it is possible that each of the TES is connected to a separate heat pump to allow simultaneous charging of different TES.
- Operating the heat pump from electric energy storage to charge the DHW-TES or provide space heating from the heat pump to cover thermal demand, if no onsite renewable energy is available. The electricity source for the heat pump can be the local on-site renewable energy system, the EES, the national or wider-area grid, or a local microgrid that may include community-level shared renewables energy and storage assets.
- Discharge DHW is manually initiated by user and cannot be controlled directly, but DHW is supplied by the system and the system needs to react to it.
- Space heating can either be provided from the heat pump or the space heating TES. Additional space heating operation modes can arise, if there are different temperature zones or different types of heat emitters in the building.
- Additional modes may also be defined that use alternative heat sources to preheat the TES. This could include solar-thermal collectors, reclaimed heat from waste water from buildings or community sewer lines, or back-up fossil fuel burners.

For the integration of a state of charge monitoring system, several thresholds are defined:
- SOC monitoring applied to DHW-TES and SH-TES. Once the SOC drops below a lower limit threshold charging is activated until the SOC reaches an upper limit threshold:
   ∘ Charging start conditions or lower limit SOC threshold (LLₘᵢₙ) is the absolute minimum whereas lower limits (LL_{Normal}, LL_{Boost}) corresponding to normal or boosted SOC levels for DHW and SH-TES during different operating periods of the day, e.g., normal, or proactive periods.
   ∘ Charging end conditions or upper limit SOC thresholds (UL_{Normal}, UL_{Boost}) at different times during the day.
- SOC monitoring applied to system for EES devices is integrated with a PV energy manager and then connected with the forecast system in Fig.1.
   ∘ If there is a PV generation forecast, lower limit SOC for EES (LL_{EES}) is to be calculated based on current SOC, historical building electricity demand during the hours of PV generation and time-of-use electricity price forecast.
   ∘ The maximum power ratings of EES, P_{EES,max}, is the maximum rated charge or discharge rate of a connected EES.
- Wind generation prediction from weather data and threshold if a wind turbine is in-stalled on-site or shared between the local community. In many countries this can also be used to anticipate low ToU prices from weather data, where electricity price is related to carbon intensity of the overall generation mix.

Moreover, user settings are possible: Let the user set the priority level setting, e.g.:
- "Battery" prioritises electric battery storage over SH-TES to charge EES first.
- "Boost" allows the system to boost room temperature when EES and SH-TES are fully charged, but renewables energy is available. A resistance heater can also be used to boost temperature of SH-TES and DHW-TES beyond maximum heat pump output temperature.

The above described control logic can be integrated into a controller (control device), i.e. the controller can be configured to implement the above-identified logic.

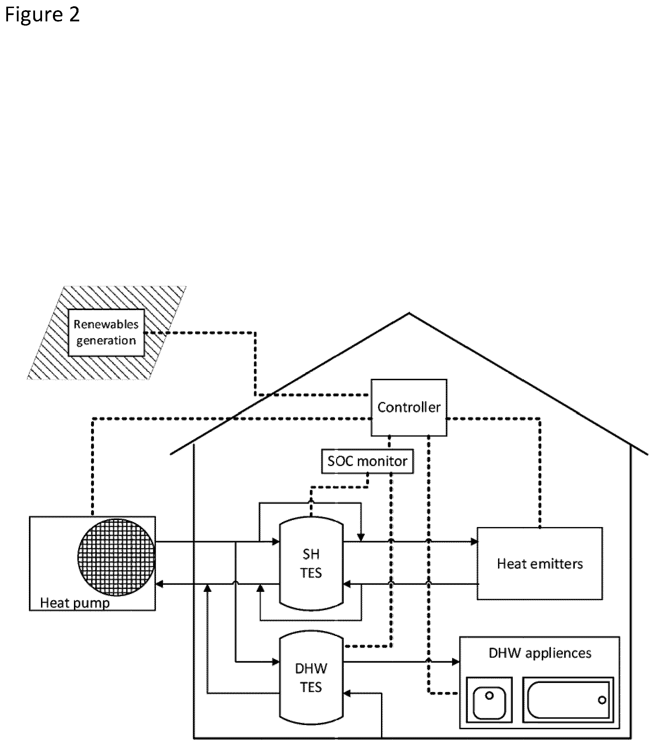

Figure 2 shows an implementation in which the controller is a computational device that is connected to all the buildings energy hardware including heat pump, renewables generation, DHW-TES, SH-TES, SOC monitoring system/software and the appliances. In an alternative implementation, an EES can also be connected to the controller. The controller exchanges data with the connected hardware and either controls the hardware directly or feeds settings into to the hardware's individual controllers, e.g. on/off and load signals..

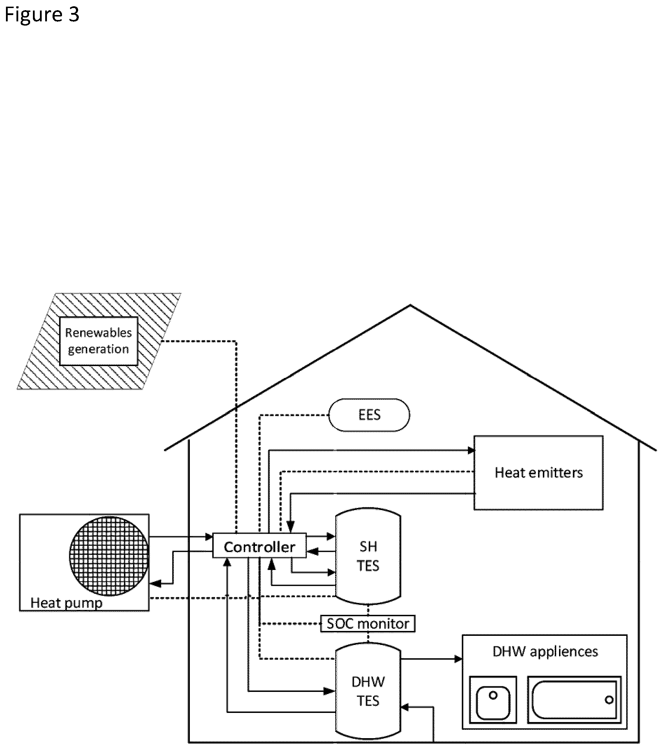

Figure 3 shows an implementation in which the at least one electrical energy storage device (battery) is charged with any surplus renewable energy, which is a common operating principle for renewable and EES systems. Whenever the renewables output exceeds the electricity consumption from the house, renewable energy is used to charge EES. Furthermore, the controller shown in Figure 3 features its own hardware components such as valves, pipework and instrumentation in addition to the data links to the connected devices.

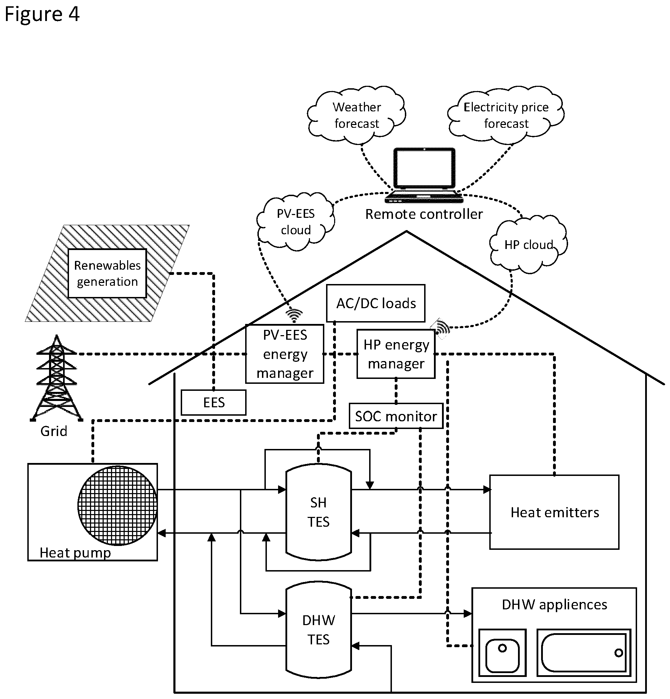

Figure 4 shows an implementation in which the controller is integrated into a cloud connected control device. Figure 4 demonstrates the controller as a computational device that is located remotely and is connected to building energy management devices such as PV-EES energy manager and heat pump local controller via cloud application programming interfaces. Other cloud services including weather and electricity price forecasts are also connected to the (remote) controller. There are no physical connections between the controller and building hardware devices. All the building energy hardware including a heat pump, renewables generation, DHW-TES, SH-TES, SOC monitoring system/software, and the appliances are either connected to the PV-EES energy manager or heat pump local controller, which are them-selves connected to the internet either via a wired or wireless connection. The remote controller acts as a master controller that makes control decisions and sends commands to energy managers, who act as slave controllers, to perform control actions, e.g. on/off, load signals, etc.

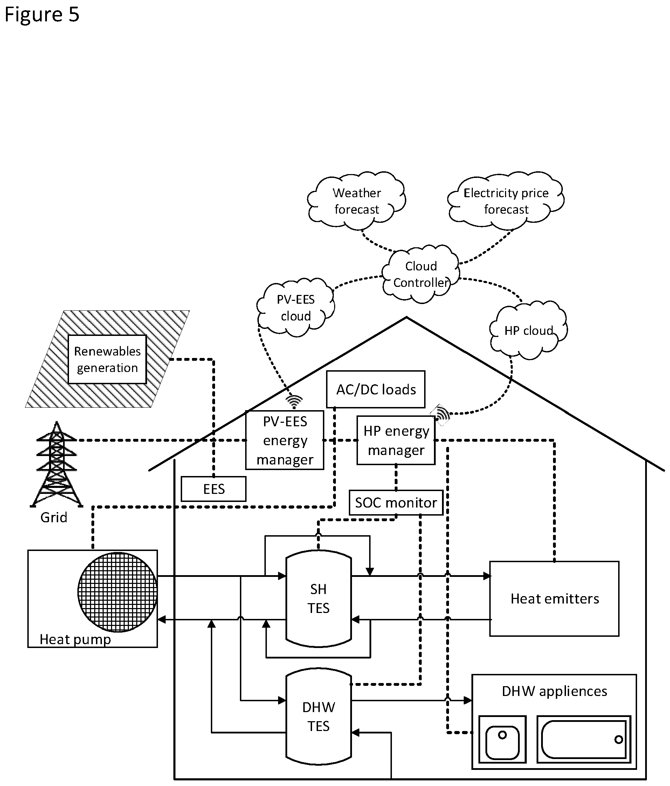

Figure 5 shows an implementation in which the controller itself is placed in a cloud platform and hence a dedicated machine for remote controls is eliminated.

In this implementation case, the controller still relies on intermediary slave controllers such as PV-EES energy manager and heat pump local controller to perform control actions.

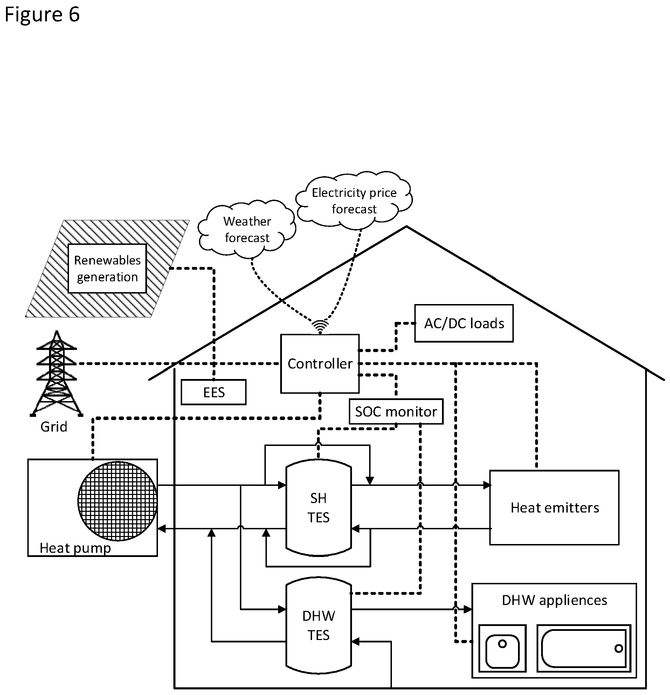

Figure 6 shows an implementation in which, slave controllers are not required and a local internet-connected master controller is employed to integrate functions from PV-EES energy manager and heat pump local controller as well as control features developed in this invention.

### Reference signs and abbreviations

- DHW: Domestic hot water
- DHW-TES: First thermal energy storage device for domestic hot water
- SH: Space heating
- SH-TES: Second thermal energy storage device for space heating
- EES: Electrical energy storage device
- FCU: Fan coil unit
- HP: Heat pump
- LL_{EES}: Lower limit state of charge threshold for EES
- LL_{DHW}: Lower limit state of charge threshold for DHW-TES
- LL_{SH}: Lower limit state of charge threshold for SH-TES
- LL_{min, DHW}: Lower limit state of charge threshold for DHW-TES to maintain minimum level
- LL_{min, SH}: Lower limit state of charge threshold for SH-TES to maintain minimum level
- LL_{DHW}, _{Boost}: Lower limit state of charge threshold in proactive period for DHW-TES (to boost its SOC)
- LL_{SH}, _{Boost}: Lower limit state of charge threshold in proactive period for SH-TES (to boost its SOC)
- LL_{DHW}, _{Normal}: Lower limit state of charge threshold for DHW-TES in normal period
- LL_{SH}, _{Normal}: Lower limit state of charge threshold for SH-TES in normal period
- N: Decision result negative - "No"
- PV: Renewable energy source (e.g. photovoltaics)
- P_{EES,max}: Maximum charge and discharge power of EES
- P_{gen}: Power generation from renewables
- P_{grid}: Power to and from grid
- SOC: State of charge
- SOC_{DHW}: State of charge of DHW-TES
- SOC_{EES}: State of charge of EES
- SOC_{SH}: State of charge of SH-TES
- Tᵣₒₒₘ: Room temperature measured
- Tₛₑₜ: Target room temperature setpoint (e.g. thermostat setpoint)
- T_{set, Boost}: Target room temperature setpoint in proactive period
- T_{set, Normal}: Target room temperature setpoint in normal period
- ΔTₛₑₜ: Room temperature deadband
- ΔT_{set, Boost}: Room temperature deadband in proactive period
- ΔT_{set, Normal}: Room temperature deadband in normal period
- ToU: Time-of-use electricity tariff
- TES: Thermal energy storage
- UL: Upper limit state of charge threshold
- UL_{DHW}: Upper limit state of charge threshold for DHW
- UL_{SH}: Upper limit state of charge threshold for SH
- UL_{DHW}, _{Boost}: Upper limit state of charge threshold in proactive period for DHW to boost SOC
- UL_{SH}, _{Boost}: Upper limit state of charge threshold in proactive period for SH to boost SOC
- UL_{DHW}, _{Normal}: Upper limit state of charge threshold for DHW in normal period
- UL_{SH}, _{Normal}: Upper limit state of charge threshold for SH in normal period
- UL_{Normal}: Upper limit state of charge threshold in normal operation
- Y: Decision result positive - "Yes"

## Claims

1. Energy management system for a building, comprising
at least one heat pump (HP),
at least one first thermal energy storage device (DHW-TES) for providing domestic hot water (DHW),
at least one second thermal energy storage device (SH-TES) for providing space heating (SH),
at least one renewable energy generation device (PV) for providing electrical energy,
at least one electrical energy storage device (EES),
at least one first state of charge (SOC) analyser for determining the state of charge (SOC_{DHW}) of the at least one first thermal energy storage device (DHW-TES),
at least one second state of charge (SOC) analyser for determining the state of charge (SOC_{SH}) of the at least one second thermal energy storage device (SH-TES),
at least one third state of charge (SOC) analyser for determining the state of charge (SOC_{EES}) of the at least one electrical energy storage device (EES), and
a controller configured to control an operation of the at least one heat pump (HP), the at least one first thermal energy storage device (DHW-TES), the at least one second thermal energy storage device (SH-TES), the at least one electrical energy storage device (EES) and the at least one renewable energy generation device (PV),
wherein the controller is configured to determine a state of charge (SO-C_{EES}) of the at least one electrical energy storage device (EES) based on information of the at least one third state of charge (SOC) analyser, and wherein the controller is configured to control a charging and/or a discharging of the at least one electrical energy storage device (EES) based on a determined a state of charge (SOC_{EES}) of the at least one electrical energy storage device (EES).

2. Energy management system according to the preceding claim, **characterized in that** the system comprises a grid connection for providing and accepting electrical energy.

3. Energy management system according to one of the preceding claims, **characterized in that** the controller is configured to determine and/or receive a weather forecast, a forecast about an amount of electrical energy provided by the at least one renewable energy generation device (PV) and/or a forecast about a price of electrical energy provided by a grid connection of the system, wherein the controller is preferably configured to
i) update said forecast, preferably in a time interval in the range of 1 minute to 48 hours, preferably in a time interval of 18 to 30 hours, especially in a time interval of 24 hours; and/or
ii) set a lower limit state of charge threshold (LL_{EES}) for the at least one electrical energy storage device (EES) depending on the determined and/or received forecast.

4. Energy management system according to one of the preceding claims, **characterized in that** the at least one renewable energy generation device (PV) for providing electrical energy is selected from the group consisting photovoltaic devices, wind turbines, water turbines and combinations thereof.

5. Energy management system according to one of the preceding claims, **characterized in that**
- the at least one first thermal energy storage device (DHW-TES) for providing domestic hot water (DHW) is selected from the group consisting of phase-change material storage devices, hot water tanks, and combinations thereof, preferably phase-change material storage devices with a melting point of 40 °C to 70 °C; and/or
- the at least one second thermal energy storage device (SH-TES) for providing space heating (SH) is selected from the group consisting of phase-change material storage devices, buffer tanks, and combinations thereof, preferably phase-change material storage devices with a melting point of 30 °C to 55 °C; and/or
- the at least one electrical energy storage device (EES) is selected from the group consisting of batteries, capacitors, and combinations thereof, wherein the at least one electrical energy storage device (EES) is preferably selected from the group consisting of lead batteries, Li-ion batteries and flow batteries.

6. Energy management system according to one of the preceding claims, **characterized in that** the system further comprises at least one renewable energy generation device for providing thermal energy, wherein preferably
i) the at least one renewable energy generation device for providing thermal energy is selected from the group consisting of solar collector, waste water heat recovery device, district heating network and combinations thereof; and/or
ii) the controller is configured to provide thermal energy, which is available from the at least one renewable energy generation device for providing thermal energy, to the at least one first thermal energy storage device (DHW-TES) for providing domestic hot water (DHW) and/or to the at least one second thermal energy storage device (SH-TES) for providing space heating (SH).

7. Energy management system according to one of the preceding claims, **characterized in that** the controller is configured such that, when
i) a state of charge (SOC_{EES}) of the at least one electrical energy storage device (EES) is at or below a lower limit of a charge threshold (LL_{EES}) for the at least one electrical energy storage device (EES), a discharge of the at least one electrical storage device (EES) is prohibited; and/or
ii) a state of charge (SOC_{EES}) of the at least one electrical energy storage device (EES) is above a lower limit of a charge threshold (LL_{EES}) for the at least one electrical energy storage device (EES), a discharge of the at least one electrical storage device (EES) is allowed.

8. Energy management system according to one of the preceding claims, **characterized in that** the controller is configured to prioritize using electrical power (P_{gen}) which is available from the at least one renewable energy generation device (PV) for providing electrical energy and/or which is available from the at least one electrical energy storage device (EES), over electrical power (P_{grid}) available from the grid connection, wherein the controller is preferably configured to direct the electrical power (P_{gen}) from the at least one renewable energy generation device (PV) for providing electrical energy and/or from the at least one electrical energy storage device (EES) to
i) any device of the system, preferably when electrical power is needed by any device of the system;
ii) the at least one heat pump (HP), preferably when electrical power is needed by the at least one heat pump (HP), optionally when a state of charge (SOC_{DHW}) of the at least one first thermal energy storage device (DHW-TES) for providing domestic hot water (DHW) is below a lower limit state of charge threshold (LL_{min, DHW}) to maintain a minimum level and/or when a state of charge (SOC_{SH}) of the at least one second thermal energy storage device (SH-TES) for providing space heating (SH) is below a lower limit state of charge threshold (LL_{min, SH}) to maintain a minimum level; and/or
iii) the at least one electrical energy storage device (EES), preferably when no electrical power is needed by any device of the system and a state of charge (SOC_{EES}) of the at least one electrical energy storage device (EES) is below an upper limit state of charge threshold (UL); and/or
iv) a grid connection of the system, preferably when no electrical power is needed by any device of the system and when a state of charge (SOC_{EES}) of the at least one electrical energy storage device (EES) is above an upper limit state of charge threshold (UL).

9. Energy management system according to one of the preceding claims, **characterized in that** the controller is configured such that, when surplus electrical energy is available from the at least one renewable energy generation device (PV), a charge of the at least one electrical energy storage device (EES) by the at least one renewable energy generation device (PV) is prioritized compared to a supply of electrical energy to the at least one electrical energy storage device (EES) by a grid to which the system is connected.

10. Energy management system according to one of the preceding claims, **characterized in that** the controller is configured to enter a proactive period when at least one of the following conditions is fulfilled and/or to enter a normal period when none of the following conditions is fulfilled:
i) the at least one heat pump (HP) is active and a power generation (P_{gen}) from the at least one renewable energy generation device (PV) is larger than a maximum charge and discharge power (P_{EES,max}) of the at least one electrical energy storage device (EES);
ii) the at least one heat pump (HP) is inactive and electrical power (P_{grid}) is provided to the grid connection;
iii) a price for obtaining electrical energy from the grid connection is below a set threshold; and
iv) a set amount of hours preceding a peak in price for obtaining electrical energy from the grid connection has been entered;
wherein, in the
proactive period, an upper limit of a state of charge threshold (UL_{DHW,} UL_{SH}) of the at least one first thermal energy storage device (DHW-TES) for providing domestic hot water (DHW) and of the at least one second thermal energy storage device (SH-TES) for providing space heating (SHW) is set to a boost value (UL_{DHW, Boost}, UL_{SH, Boost}), and a lower limit of a state of charge threshold (LL_{DHW,} LL_{SH}) of the at least one first thermal energy storage device (DHW-TES) for providing domestic hot water (DHW) and of the at least one second thermal energy storage device (SH-TES) for providing space heating (SH) is set to a boost value (LL_{DHW,} Boost, LL_{SH,} Boost); and/or
normal period, an upper limit of a state of charge threshold (UL_{DHW,} UL_{SH}) of the at least one first thermal energy storage device (DHW-TES) for providing domestic hot water (DHW) and of the at least one second thermal energy storage device (SH-TES) for providing space heating (SH) is set to a normal value (UL_{DHW, Normal}, UL_{SH, Normal}), and a lower limit of a state of charge threshold (LL_{DHW,} LL_{SH}) of the at least one first thermal energy storage device (DHW-TES) for providing domestic hot water (DHW) and of the at least one second thermal energy storage device (SH-TES) for providing space heating (SH) is set to a normal value (LL_{DHW,} Normal, LL_{SH,} Normal).

11. Energy management system according to the preceding claim, **characterized in that** the controller is configured such that, when the proactive period has been entered and when the at least one first thermal energy storage device (DHW-TES) for providing domestic hot water (DHW) and the at least one second thermal energy storage device (SH-TES) for providing space heating (SH) are
i) fully charged, a target room temperature setpoint (Tₛₑₜ) is set to a boosted target room temperature setpoint (T_{set, Boost}) and a room temperature deadband (ΔTₛₑₜ) is set to a boosted room temperature deadband (ΔT_{set, Boost}); and/or
ii) not fully charged, a target room temperature setpoint (Tₛₑₜ) is set to a normal target room temperature setpoint (T_{set, Normal}) and a room temperature deadband (ΔTₛₑₜ) is set to a normal room temperature deadband (ΔT_{set, Normal}).

12. Energy management system according to one of the preceding claims, **characterized in that** the controller is configured such that, when
a state of charge (SOC_{DHW}) of the at least one first thermal energy storage device (DHW-TES) is below a predefined first minimum lower limit state of charge threshold (LL_{min,DHW}),
the at least one first thermal energy storage device (DHW-TES) is charged, preferably by energy provided by the at least one heat pump (HP).

13. Method for energy management of a building, comprising using an energy management system for a building according to any one of claims 1 to 12 to manage energy in a building.

## Patentansprüche

1. Energiemanagementsystem für ein Gebäude, umfassend:
zumindest eine Wärmepumpe (HP),
zumindest eine erste Wärmeenergiespeichereinrichtung (DHW-TES) zur Bereitstellung von Brauchwarmwasser (DHW),
zumindest eine zweite Wärmeenergiespeichereinrichtung (SH-TES) zur Bereitstellung von Raumerwärmung (SH),
zumindest eine Erneuerbare-Energie-Erzeugungseinrichtung (PV) zur Erzeugung von elektrischer Energie,
zumindest eine Elektrische-Energie-Speichereinrichtung (EES),
zumindest einen ersten Ladezustands-(SOC)-Analysator zur Bestimmung des Ladezustands (SOC_{DHW}) der zumindest einen ersten Wärmeenergiespeichereinrichtung (SOC-TES),
zumindest einen zweiten Ladezustands-(SOC)-Analysator zur Bestimmung des Ladezustands (SOC_{SH}) der zumindest einen zweiten Wärmeenergiespeichereinrichtung (SH-TES),
zumindest einen dritten Ladezustands-(SOC)-Analysator zur Bestimmung des Ladezustands (SOC_{EES}) der zumindest einen Elektrische-Energie-Speichereinrichtung (EES), und
eine Steuereinheit, die eingerichtet ist, einen Betrieb der zumindest einen Wärmepumpe (HP), der zumindest einen ersten Wärmeenergiespeichereinrichtung (DHW-TES), der zumindest einen zweiten Wärmeenergiespeichereinrichtung (SH-TES), der zumindest einen Elektrische-Energie-Speichereinrichtung (EES) und der zumindest einen Erneuerbare-Energie-Erzeugungseinrichtung (PV) zu steuern,
wobei die Steuereinheit eingerichtet ist, einen Ladezustand (SOC_{EES}) der zumindest einen Elektrische-Energie-Speichereinrichtung (EES) basierend auf Informationen von dem zumindest einen dritten Ladezustands-(SOC)-Analysator zu ermitteln, und
wobei die Steuereinheit eingerichtet ist, ein Laden und/oder ein Entladen der zumindest einen Elektrische-Energie-Speichereinrichtung (EES) basierend auf einem ermittelten Ladezustand (SOC_{EES}) der zumindest einen Elektrische-Energie-Speichereinrichtung (EES) zu steuern.

2. Energiemanagementsystem nach dem vorangehenden Anspruch, **dadurch gekennzeichnet, dass** das System einen Netzanschluss zum Bereitstellen und Abnehmen von elektrischer Energie umfasst.

3. Energiemanagementsystem nach einem der vorangehenden Ansprüche, **dadurch gekennzeichnet, dass** die Steuereinheit eingerichtet ist, eine Wetterprognose, eine Prognose über eine Menge an elektrischer Energie, die von der zumindest einen Elektrische-Energie-Erzeugungseinrichtung (PV) bereitgestellt wird, und/oder eine Prognose über einen Preis für elektrische Energie, die von einem Netzanschluss des Systems bereitgestellt wird, zu bestimmen und/oder zu empfangen, wobei die Steuereinheit vorzugsweise eingerichtet ist, um:
i) diese Prognose zu aktualisieren, vorzugsweise in einem Zeitintervall im Bereich von 1 Minute bis 48 Stunden, vorzugsweise in einem Zeitintervall von 18 bis 30 Stunden, insbesondere in einem Zeitintervall von 24 Stunden; und/oder
ii) einen unteren Ladezustandsgrenzschwellenwert (LL_{EES}) für die zumindest eine Elektrische-Energie-Speichereinrichtung (EES) in Abhängigkeit von der bestimmten und/oder empfangenen Prognose festzulegen.

4. Energiemanagementsystem nach einem der vorangehenden Ansprüche, **dadurch gekennzeichnet, dass** die zumindest eine Erneuerbare-Energie-Erzeugungseinrichtung (PV) zur Bereitstellung von elektrischer Energie aus der Gruppe ausgewählt ist, die aus Photovoltaikanlagen, Windturbinen, Wasserturbinen und Kombinationen davon besteht.

5. Energiemanagementsystem nach einem der vorangehenden Ansprüche, **dadurch gekennzeichnet, dass**
- die zumindest eine erste Wärmeenergiespeichereinrichtung (DHW-TES) zur Bereitstellung von Brauchwarmwasser (DHW) aus der Gruppe ausgewählt ist, die aus Phasenwechselmaterialspeichereinrichtungen, Warmwasserbehältern und Kombinationen davon, vorzugsweise Phasenwechselmaterialspeichereinrichtungen mit einem Schmelzpunkt von 40 °C bis 70 °C, besteht; und/oder
- die zumindest eine zweite Wärmeenergiespeichereinrichtung (SH-TES) zur Bereitstellung von Raumerwärmung (SH) aus der Gruppe ausgewählt ist, die aus Phasenwechselmaterialspeichereinrichtungen, Pufferbehältern und Kombinationen davon, vorzugsweise Phasenwechselmaterialspeichereinrichtungen mit einem Schmelzpunkt von 30 °C bis 55 °C, besteht; und/oder
- die zumindest eine Elektrische-Energie-Speichereinrichtung (EES) aus der Gruppe ausgewählt ist, die aus Batterien, Kondensatoren und Kombinationen davon besteht, wobei die zumindest eine Elektrische-Energie-Speichereinrichtung (EES) vorzugsweise aus der Gruppe ausgewählt ist, die aus Bleibatterien, Li-lonen-Batterien und Durchflussbatterien besteht.

6. Energiemanagementsystem nach einem der vorangehenden Ansprüche, **dadurch gekennzeichnet, dass** das System ferner zumindest eine Erneuerbare-Energie-Erzeugungseinrichtung zur Bereitstellung von Wärmeenergie umfasst, wobei vorzugsweise
i) die zumindest eine Erneuerbare-Energie-Erzeugungseinrichtung zur Bereitstellung von Wärmeenergie aus der Gruppe ausgewählt ist, die aus Sonnenkollektor, Abwasserwärmerückgewinnungseinrichtung, Fernwärmenetz und Kombinationen davon besteht; und/oder
ii) die Steuereinheit eingerichtet ist, Wärmeenergie, die von der zumindest einen Erneuerbare-Energie-Erzeugungseinrichtung zur Bereitstellung von Wärmeenergie zur Verfügung steht, der zumindest einen ersten Wärmeenergiespeichereinrichtung (DHW-TES) zur Bereitstellung von Brauchwarmwasser (DHW) und/oder der zumindest einen zweiten Wärmeenergiespeichereinrichtung (SH-TES) zur Bereitstellung von Raumerwärmung (SH) bereitzustellen.

7. Energiemanagementsystem nach einem der vorangehenden Ansprüche, **dadurch gekennzeichnet, dass** die Steuereinheit so eingerichtet ist, dass, wenn
i) ein Ladezustand (SOC_{EES}) der zumindest einen Elektrische-Energie-Speichereinrichtung (EES) bei oder unter einer unteren Grenze eines Ladeschwellenwerts (LL_{EES}) für die zumindest eine Elektrische-Energie-Speichereinrichtung (EES) liegt, eine Entladung der zumindest einen Elektrische-Energie-Speichereinrichtung (EES) nicht zugelassen wird; und/oder
ii) ein Ladezustand (SOC_{EES}) der zumindest einen Elektrische-Energie-Speichereinrichtung (EES) über einer unteren Grenze eines Ladeschwellenwerts (LL_{EES}) für die zumindest eine Elektrische-Energie-Speichereinrichtung (EES) liegt, eine Entladung der zumindest einen Elektrische-Energie-Speichereinrichtung (EES) zugelassen wird.

8. Energiemanagementsystem nach einem der vorangehenden Ansprüche, **dadurch gekennzeichnet, dass** die Steuereinheit eingerichtet ist, Nutzung von elektrischer Leistung (P_{gen}), die von der zumindest einen Erneuerbare-Energie-Erzeugungseinrichtung (PV) zur Bereitstellung von elektrischer Energie zur Verfügung steht und/oder die von der zumindest einen Elektrische-Energie-Speichereinrichtung (EES) zur Verfügung steht, Vorrang vor elektrischer Leistung (P_{grid}), die aus dem Netzanschluss zur Verfügung steht, einzuräumen, wobei die Steuereinheit vorzugsweise eingerichtet ist, die elektrische Leistung (P_{gen}) von der zumindest einen Erneuerbare-Energie-Erzeugungseinrichtung (PV) zur Bereitstellung von elektrischer Energie und/oder von der zumindest einen Elektrische-Energie-Speichereinrichtung (EES) zu führen an:
i) eine beliebige Einrichtung des Systems, vorzugsweise dann, wenn eine beliebige Einrichtung des Systems elektrische Leistung benötigt;
ii) die zumindest eine Wärmepumpe (HP), vorzugsweise wenn elektrische Leistung von der zumindest einen Wärmepumpe (HP) benötigt wird, optional wenn ein Ladezustand (SOC_{DHW}) der zumindest einen ersten Wärmeenergiespeichereinrichtung (DHW-TES) zur Bereitstellung von Brauchwarmwasser (DHW) unter einem unteren Ladezustandsgrenzschwellenwert (LLₘᵢₙ, _{DHW}) liegt, um ein Mindestniveau aufrechtzuerhalten, und/oder wenn ein Ladezustand (SOC_{SH}) der zumindest einen zweiten Wärmeenergiespeichereinrichtung (SH-TES) zur Bereitstellung von Raumerwärmung (SH) unter einem unteren Ladezustandsgrenzschwellenwert (LLₘᵢₙ, _{SH}) liegt, um ein Mindestniveau aufrechtzuerhalten; und/oder
iii) die zumindest eine Elektrische-Energie-Speichereinrichtung (EES), vorzugsweise, wenn keine Einrichtung des Systems elektrische Leistung benötigt und ein Ladezustand (SOC_{EES}) der zumindest einen Elektrische-Energie-Speichereinrichtung (EES) unter einem oberen Ladezustandsgrenzschwellenwert (UL) liegt; und/oder
iv) einen Netzanschluss des Systems, vorzugsweise, wenn keine Einrichtung des Systems elektrische Leistung benötigt und wenn ein Ladezustand (SOC_{EES}) der zumindest einen Elektrische-Energie-Speichereinrichtung (EES) über einem oberen Ladezustandsgrenzschwellenwert (UL) liegt.

9. Energiemanagementsystem nach einem der vorangehenden Ansprüche, **dadurch gekennzeichnet, dass** die Steuereinheit eingerichtet ist, dass, wenn überschüssige elektrische Energie von der zumindest einen Erneuerbare-Energie-Erzeugungseinrichtung (PV) zur Verfügung steht, einer Ladung der zumindest einen Elektrische-Energie-Speichereinrichtung (EES) durch die zumindest eine Erneuerbare-Energie-Erzeugungseinrichtung (PV) gegenüber einer Versorgung der zumindest einen Elektrische-Energie-Speichereinrichtung (EES) mit elektrischer Energie durch ein Netz, an welches das System angeschlossen ist, Vorrang eingeräumt wird.

10. Energiemanagementsystem nach einem der vorangehenden Ansprüche, **dadurch gekennzeichnet, dass** die Steuereinheit eingerichtet ist, in einen proaktiven Zeitraum einzutreten, wenn zumindest eine der folgenden Bedingungen erfüllt ist, und/oder in einen normalen Zeitraum einzutreten, wenn keine der folgenden Bedingungen erfüllt ist:
i) die zumindest eine Wärmepumpe (HP) aktiv ist und eine Leistungserzeugung (P_{gen}) von der zumindest einen Erneuerbare-Energie-Erzeugungseinrichtung (PV) größer ist als eine maximale Lade- und Entladeleistung (P_{EES},ₘₐₓ) der zumindest einen Elektrische-Energie-Speichereinrichtung (EES);
ii) die zumindest eine Wärmepumpe (HP) inaktiv ist und elektrische Leistung (P_{grid}) für den Netzanschluss bereitgestellt wird;
iii) ein Preis für den Bezug von elektrischer Energie aus dem Netzanschluss unter einem festgelegten Schwellenwert liegt; und
iv) eine festgelegte Stundenanzahl, welche einem Spitzenwert des Preises für einen Bezug von elektrischer Energie aus dem Netzanschluss vorangeht, ist eingetreten;
wobei, in dem
proaktiven Zeitraum eine obere Grenze für einen Ladezustandsschwellenwert (UL_{DHW}, UL_{SH}) der zumindest einen ersten Wärmenergiespeichereinrichtung (DHW-TES) zur Bereitstellung von Brauchwarmwasser (DHW) und der zumindest einen zweiten Wärmeenergiespeichereinrichtung (SH-TES) zur Bereitstellung von Raumerwärmung (SHW) auf einen Verstärkungswert (UL_{DHW}, _{Boost}, UL_{SH}, _{Boost}) festgelegt wird, und eine untere Grenze eines Ladezustandsschwellenwerts (LL_{DHW}, LL_{SH}) der zumindest einen ersten Wärmeenergiespeichereinrichtung (DHW-TES) zur Bereitstellung von Brauchwarmwasser (DHW) und der zumindest einen zweiten Wärmeenergiespeichereinrichtung (SH-TES) zur Bereitstellung von Raumerwärmung (SH) auf einen Verstärkungswert (LL_{DHW}, _{Boost}, LL_{SH}, _{Boost}) festgelegt wird; und/oder
normalen Zeitraum eine obere Grenze eines Ladezustandsschwellenwerts (UL_{DHW}, UL_{SH}) der zumindest einen ersten Wärmeenergiespeichereinrichtung (DHW-TES) zur Bereitstellung von Brauchwarmwasser (DHW) und der zumindest einen zweiten Wärmeenergiespeichereinrichtung (SH-TES) zur Bereitstellung von Raumerwärmung (SH) auf einen Normalwert (UL_{DHW}, _{Normal}, UL_{SH}, _{Normal}) festgelegt wird, und eine untere Grenze eines Ladezustandsschwellwerts (LL_{DHW}, LL_{SH}) der zumindest einen ersten Wärmeenergiespeichereinrichtung (DHW-TES) zur Bereitstellung von Brauchwarmwasser (DHW) und der zumindest einen zweiten Wärmeenergiespeichereinrichtung (SH-TES) zur Bereitstellung von Raumerwärmung (SH) auf einen Normalwert (LL_{DHW}, _{Normal}, LL_{SH}, Normal) festgelegt wird.

11. Energiemanagementsystem nach dem vorangehenden Anspruch, **dadurch gekennzeichnet, dass** die Steuereinheit so eingerichtet ist, dass, wenn in den proaktive Zeitraum eingetreten wurde, und wenn die zumindest eine erste Wärmeenergiespeichereinrichtung (DHW-TES) zur Bereitstellung von Brauchwarmwasser (DHW) und die zumindest eine zweite Wärmeenergiespeichereinrichtung (SH-TES) zur Bereitstellung von Raumerwärmung (SH)
i) vollständig geladen sind, ein Ziel-Raumtemperatur-Sollwert (Tₛₑₜ) auf einen verstärkten Ziel-Raumtemperatur-Sollwert (Tₛₑₜ, _{Boost}) festgelegt wird, und ein Raumtemperatur-Totband (ΔTₛₑₜ) auf ein verstärktes Raumtemperatur-Totband (ΔTₛₑₜ, _{Boost}) festgelegt wird; und/oder
ii) nicht vollständig geladen sind, ein Ziel-Raumtemperatur-Sollwert (Tₛₑₜ) auf einen normalen Ziel-Raumtemperatur-Sollwert (Tₛₑₜ, _{Normal}) festgelegt wird, und ein Raumtemperatur-Totband (ΔTₛₑₜ) auf ein normales Raumtemperatur-Totband (ΔTₛₑₜ, _{Normal}) festgelegt wird.

12. Energiemanagementsystem nach einem der vorangehenden Ansprüche, **dadurch gekennzeichnet, dass** die Steuereinheit so eingerichtet ist, dass, wenn
ein Ladezustand (SOC_{DHW}) der zumindest einen ersten Wärmeenergiespeichereinrichtung (DHW-TES) unter einem vordefinierten ersten minimalen unteren Ladezustandsgrenzschwellenwert (LL_{min,DHW}) liegt,
die zumindest eine erste Wärmeenergiespeichereinrichtung (DHW-TES) geladen wird, vorzugsweise durch Energie, die von der zumindest einen Wärmepumpe (HP) bereitgestellt wird.

13. Verfahren zum Energiemanagement eines Gebäudes, umfassend ein Energiemanagementsystem für ein Gebäude nach einem der Ansprüche 1 bis 12, um Energie in einem Gebäude zu managen.

## Revendications

1. Système de gestion d'énergie pour un bâtiment, comprenant
au moins une pompe à chaleur (HP),
au moins un premier dispositif de stockage d'énergie thermique (DHW-TES) pour fournir de l'eau chaude domestique (DHW),
au moins un second dispositif de stockage d'énergie thermique (SH-TES) pour fournir un chauffage d'espace (SH),
au moins un dispositif de production d'énergie renouvelable (PV) pour fournir de l'énergie électrique,
au moins un dispositif de stockage d'énergie électrique (EES),
au moins un premier analyseur d'état de charge (SOC) pour déterminer l'état de charge (SOC_{DHW}) du au moins un premier dispositif de stockage d'énergie thermique (DHW-TES),
au moins un deuxième analyseur d'état de charge (SOC) pour déterminer l'état de charge (SOC_{SH}) du au moins un second dispositif de stockage d'énergie thermique (SH-TES),
au moins un troisième analyseur d'état de charge (SOC) pour déterminer l'état de charge (SOC_{EES}) du au moins un second dispositif de stockage d'énergie électrique (EES), et
un dispositif de commande configuré pour commander un fonctionnement de la au moins une pompe à chaleur (HP), du au moins un premier dispositif de stockage d'énergie thermique (DHW-TES), du au moins un second dispositif de stockage d'énergie thermique (SH-TES), du au moins un dispositif de stockage d'énergie électrique (EES) et du au moins un dispositif de production d'énergie renouvelable (PV),
dans lequel le dispositif de commande est configuré pour déterminer un état de charge (SOC_{EES}) du au moins un dispositif de stockage d'énergie électrique (EES) sur la base d'informations du au moins un troisième analyseur d'état de charge (SOC), et
dans lequel le dispositif de commande est configuré pour commander une charge et/ou une décharge du au moins un dispositif de stockage d'énergie électrique (EES) sur la base d'un état de charge déterminé (SOC_{EES}) du au moins un dispositif de stockage d'énergie électrique (EES).

2. Système de gestion d'énergie selon la revendication précédente, **caractérisé en ce que** le système comprend une connexion de réseau pour fournir et accepter de l'énergie électrique.

3. Système de gestion d'énergie selon l'une quelconque des revendications précédentes, **caractérisé en ce que** le dispositif de commande est configuré pour déterminer et/ou recevoir une prévision météorologique, une prévision concernant une quantité d'énergie électrique fournie par le au moins un dispositif de production d'énergie renouvelable (PV) et/ou une prévision concernant un prix d'énergie électrique fournie par une connexion au réseau du système, dans lequel le dispositif de commande est de préférence configuré pour
i) mettre à jour ladite prévision, de préférence dans un intervalle de temps de l'ordre de 1 minute à 48 heures, de préférence dans un intervalle de temps de 18 à 30 heures, en particulier dans un intervalle de temps de 24 heures ; et/ou
ii) définir un seuil d'état de charge de limite inférieure (LL_{EES}) pour le au moins un dispositif de stockage d'énergie électrique (EES) en fonction de la prévision déterminée et/ou reçue.

4. Système de gestion d'énergie selon l'une quelconque des revendications précédentes, **caractérisé en ce que** le au moins un dispositif de production d'énergie renouvelable (PV) pour fournir de l'énergie électrique est sélectionné dans le groupe comprenant des dispositifs photovoltaïques, des éoliennes ; des turbines à eau ; et des combinaisons de ceux-ci.

5. Système de gestion d'énergie selon l'une quelconque des revendications précédentes, **caractérisé en ce que**
- le au moins un premier dispositif de stockage d'énergie thermique (DHW-TES) pour fournir de l'eau chaude domestique (DHW) est choisi dans le groupe comprenant des dispositifs de stockage de matériau à changement de phase, des réservoirs d'eau chaude, et des combinaisons de ceux-ci, de préférence des dispositifs de stockage de matériau à changement de phase présentant un point de fusion de 40°C à 70°C ; et/ou
- le au moins un second dispositif de stockage d'énergie thermique (SH-TES) pour fournir un chauffage d'espace (SH) est choisi dans le groupe comprenant des dispositifs de stockage de matériau à changement de phase, des réservoirs tampons, et des combinaisons de ceux-ci, de préférence des dispositifs de stockage de matériau à changement de phase présentant un point de fusion de 30°C à 55°C ; et/ou
- le au moins un dispositif de stockage d'énergie électrique (EES) est choisi dans le groupe comprenant des batteries, des condensateurs et des combinaisons de ceux-ci, dans lequel le au moins un dispositif de stockage d'énergie électrique (EES) est de préférence choisi dans le groupe comprenant des batteries au plomb, des batteries Li-ion et des batteries à flux.

6. Système de gestion d'énergie selon l'une quelconque des revendications précédentes, **caractérisé en ce que** le système comprend en outre au moins un dispositif de production d'énergie renouvelable pour fournir de l'énergie thermique, dans lequel de préférence
i) le au moins un dispositif de production d'énergie renouvelable pour fournir de l'énergie thermique est choisi dans le groupe comprenant un capteur solaire, un dispositif de récupération de chaleur d'eaux usées, un réseau de chauffage urbain et des combinaisons de ceux-ci ; et/ou
ii) le dispositif de commande est configuré pour fournir de l'énergie thermique, qui est disponible à partir du au moins un dispositif de production d'énergie renouvelable pour fournir de l'énergie thermique, au au moins un premier dispositif de stockage d'énergie thermique (DHW-TES) pour fournir de l'eau chaude domestique (DHW) et/ou au au moins un second dispositif de stockage d'énergie thermique (SH-TES) pour fournir un chauffage d'espace (SH).

7. Système de gestion d'énergie selon l'une quelconque des revendications précédentes, **caractérisé en ce que** le dispositif de commande est configuré de telle sorte que
i) lorsqu'un état de charge (SOCEES) du au moins un dispositif de stockage d'énergie électrique (EES) est égal ou inférieur à une limite inférieure d'un seuil de charge (LL_{EES}) pour le au moins un dispositif de stockage d'énergie électrique (EES), une décharge du au moins un dispositif de stockage d'énergie électrique (EES) est interdite ; et/ou
ii) lorsqu'un état de charge (SOCEES) du au moins un dispositif de stockage d'énergie électrique (EES) est supérieur à une limite inférieure d'un seuil de charge (LL_{EES}) pour le au moins un dispositif de stockage d'énergie électrique (EES), une décharge du au moins un dispositif de stockage d'énergie électrique (EES) est autorisée.

8. Système de gestion d'énergie selon l'une quelconque des revendications précédentes, **caractérisé en ce que** le dispositif de commande est configuré pour donner la priorité à l'utilisation d'une puissance électrique (P_{gen}) qui est disponible à partir du au moins un dispositif de production d'énergie renouvelable (PV) pour fournir de l'énergie électrique et/ou qui est disponible à partir du au moins un dispositif de stockage d'énergie électrique (EES), par rapport à la puissance électrique (P_{grid}) disponible à partir de la connexion au réseau, dans lequel le dispositif de commande est de préférence configuré pour diriger la puissance électrique (P_{gen}) à partir du au moins un dispositif de production d'énergie renouvelable (PV) pour fournir de l'énergie électrique et/ou à partir du au moins un dispositif de stockage d'énergie électrique (EES) vers
i) un quelconque dispositif du système, de préférence lorsque de la puissance électrique est nécessaire à tout dispositif du système ;
ii) la au moins une pompe à chaleur (HP), de préférence lorsque de la puissance électrique est nécessaire à la au moins une pompe à chaleur (HP), facultativement lorsqu'un état de charge (SOC_{DHW}) du au moins un premier dispositif de stockage d'énergie thermique (DHW-TES) pour fournir de l'eau chaude domestique (DHW) est inférieur à un seuil d'état de charge de limite inférieure (LL_{min, DHW}) pour maintenir un niveau minimum et/ou lorsqu'un état de charge (SOC_{SH}) du au moins un second dispositif de stockage d'énergie thermique (SH-TES) pour fournir un chauffage d'espace (SH) est inférieur à un seuil d'état de charge de limite inférieure (LL_{min, SH}) pour maintenir un niveau minimum ; et/ou
iii) le au moins un dispositif de stockage d'énergie électrique (EES), de préférence lorsqu'aucun dispositif du système n'a besoin d'énergie électrique et qu'un état de charge (SOC_{EES}) du au moins un dispositif de stockage d'énergie électrique (EES) est inférieur à un seuil d'état de charge de limite supérieure (UL) ; et/ou
iv) une connexion au réseau du système, de préférence lorsqu'aucun dispositif du système n'a besoin de puissance électrique et lorsqu'un état de charge (SOC_{EES}) du au moins un dispositif de stockage d'énergie électrique (EES) est supérieur à un seuil d'état de charge de limite supérieure (UL).

9. Système de gestion d'énergie selon l'une quelconque des revendications précédentes, **caractérisé en ce que** le dispositif de commande est configuré de telle sorte que lorsque de l'énergie électrique excédentaire est disponible à partir du au moins un dispositif de production d'énergie renouvelable (PV), une charge du au moins un dispositif de stockage d'énergie électrique (EES) par le au moins un dispositif de production d'énergie renouvelable (PV) est priorisée par comparaison à une alimentation en énergie électrique du au moins un dispositif de stockage d'énergie électrique (EES) par un réseau auquel le système est connecté.

10. Système de gestion d'énergie selon l'une quelconque des revendications précédentes, **caractérisé en ce que** le dispositif de commande est configuré pour entrer dans une période proactive lorsqu'au moins l'une des conditions suivantes est remplie et/ou pour entrer dans une période normale lorsqu'aucune des conditions suivantes n'est remplie :
i) la au moins une pompe à chaleur (HP) est active et une production de puissance (P_{gen}) à partir du au moins un dispositif de production d'énergie renouvelable (PV) est supérieure à une puissance de charge et de décharge maximale (P_{EES,max}) du au moins un dispositif de stockage d'énergie électrique (EES) ;
ii) la au moins une pompe à chaleur (HP) est inactive et de la puissance électrique (P_{grid}) est fournie à la connexion au réseau ;
iii) un prix pour obtenir de l'énergie électrique à partir de la connexion au réseau est inférieur à un seuil fixé ; et
iv) un nombre d'heures déterminé précédant un pic de prix pour obtenir de l'énergie électrique à partir du raccordement au réseau a été entré ;
dans lequel, dans la
période proactive, une limite supérieure d'un seuil d'état de charge (UL_{DHW}, UL_{SH}) du au moins un premier dispositif de stockage d'énergie thermique (DHW-TES) pour fournir de l'eau chaude domestique (DHW) et du au moins un second dispositif de stockage d'énergie thermique (SH-TES) pour fournir du chauffage d'espace (SHW) est réglée sur une valeur d'amplification (UL_{DHW, Boost,} UL_{SH, Boost}), et une limite inférieure d'un seuil d'état de charge (LL_{DHW}, LL_{SH}) du au moins un premier dispositif de stockage d'énergie thermique (DHW-TES) pour fournir de l'eau chaude domestique (DHW) et du au moins un second dispositif de stockage d'énergie thermique (SH-TES) pour fournir du chauffage d'espace (SH) est réglée sur une valeur d'amplification (LL_{DHW, Boost}, LL_{SH, Boost}) ; et/ou
dans la période normale, une limite supérieure d'un seuil d'état de charge (UL_{DHW}, UL_{SH}) du au moins un premier dispositif de stockage d'énergie thermique (DHW-TES) pour fournir de l'eau chaude domestique (DHW) et du au moins un second dispositif de stockage d'énergie thermique (SH-TES) pour fournir un chauffage d'espace (SH) est réglée sur une valeur normale (UL_{DHW, Normal}, UL_{SH, Normal}), et une limite inférieure d'un seuil d'état de charge (LL_{DHW}, LL_{SH}) du au moins un premier dispositif de stockage d'énergie thermique (DHW-TES) pour fournir de l'eau chaude domestique (DHW) et du au moins un second dispositif de stockage d'énergie thermique (SH-TES) pour fournir un chauffage d'espace (SH) est réglée sur une valeur normale (LL_{DHW, Normal}, LL_{SH, Nor-mal}).

11. Système de gestion d'énergie selon la revendication précédente, **caractérisé en ce que** le dispositif de commande est configuré de telle sorte que lorsque la période proactive a été entrée et lorsque le au moins un premier dispositif de stockage d'énergie thermique (DHW-TES) pour fournir de l'eau chaude domestique (DHW) et le au moins un second dispositif de stockage d'énergie thermique (SH-TES) pour fournir un chauffage d'espace (SH)
i) sont complètement chargés, un point de consigne de température ambiante cible (Tₛₑₜ) est réglé sur un point de consigne de température ambiante cible amplifiée (T_{set, Boost}) et une zone morte de température ambiante (ΔTₛₑₜ) est réglée sur une zone morte de température ambiante amplifiée (ΔT_{set, Boost}) ; et/ou
ii) ne sont pas complètement chargés, un point de consigne de température ambiante cible (Tₛₑₜ) est réglé sur un point de consigne de température ambiante cible normale (T_{set, Normal}) et une zone morte de température ambiante (ΔTₛₑₜ) est réglée sur une zone morte de température ambiante normale (ΔT_{set, Normal}).

12. Système de gestion d'énergie selon l'une quelconque des revendications précédentes, **caractérisé en ce que** le dispositif de commande est configuré de telle sorte que
quand un état de charge (SOC_{DHW}) du au moins un premier dispositif de stockage d'énergie thermique (DHW-TES) est inférieur à un premier seuil d'état de charge de limite inférieure minimum prédéfini (LL_{min,DHW}),
le au moins un premier dispositif de stockage d'énergie thermique (DHW-TES) est chargé, de préférence par de l'énergie fournie par la au moins une pompe à chaleur (HP).

13. Procédé de gestion d'énergie d'un bâtiment, comprenant l'utilisation d'un système de gestion d'énergie pour un bâtiment selon l'une quelconque des revendications 1 à 12 pour gérer l'énergie dans un bâtiment.
